(19) Europäisches Patentamt
European Patent Office
Office européen des brevets

(11) EP 4 656 668 A1

(12) EUROPEAN PATENT APPLICATION
published in accordance with Art. 153(4) EPC

(43) Date of publication:
03.12.2025 Bulletin 2025/49

(21) Application number: 23918539.0

(22) Date of filing: 20.11.2023

(51) International Patent Classification (IPC):
*C08G 69/02* $^{(2006.01)}$ *H01B 3/30* $^{(2006.01)}$

(52) Cooperative Patent Classification (CPC):
C08G 69/02; H01B 3/30

(86) International application number:
PCT/JP2023/041570

(87) International publication number:
WO 2024/157584 (02.08.2024 Gazette 2024/31)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 25.01.2023 JP 2023009366

(71) Applicant: MITSUBISHI GAS CHEMICAL COMPANY, INC.
Chiyoda-ku
Tokyo 100-8324 (JP)

(72) Inventor: OTSUKA Kosuke
Tokyo 100-8324 (JP)

(74) Representative: Vossius & Partner Patentanwälte Rechtsanwälte mbB
Siebertstrasse 3
81675 München (DE)

# (54) INSULATING MATERIAL HAVING HIGH WITHSTAND VOLTAGE, AND INSULATING MOLDED ARTICLE HAVING HIGH WITHSTAND VOLTAGE

(57) Provided are an insulating material and a high withstand voltage insulating molded article. A high withstand voltage insulating material includes a polyamide resin (A) containing a structural unit containing a ring (a) selected from the group consisting of a benzene ring, a naphthalene ring, and a cyclohexane ring, a content ratio of the ring (a) on a molecular weight basis in the polyamide resin (A) is from 10 to 60 mass%, and the polyamide resin (A) satisfies Formula (A):

$$1.0 \leq [B/(A \times C)] \times 100 \leq 5.0 \cdots (A)$$

where A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

EP 4 656 668 A1

## Description

Technical Field

The present invention relates to a high withstand voltage insulating material, a high withstand voltage insulating molded article, and an application thereof.

Background Art

Since polyamide resins have excellent mechanical properties, surface appearance, and thermal resistance, they are preferably used for applications in automobiles and electric and electronic parts. Polyamide resins are used for engine peripheral parts and the like in automobile applications because the polyamide resins have excellent mechanical properties and thermal resistance; however, in recent years, environmental conditions around engines have become increasingly severe with an increase in density of peripheral parts of engines and an increase in engine output, and mechanical properties and surface appearance under higher temperature/higher humidity are required. In addition, also in electric and/or electronic part applications, weight reduction, space saving, and capacity increase have progressed, which led to an increasing demand for improving characteristics of a resin molded article serving as a part of a part. In particular, a polyamide resin material having high insulation properties is required.

Under such circumstances, Patent Document 1 discloses a polyamide resin composition containing, based on 100 parts by weight of (A) a polyamide resin, from 0.5 to 10 parts by weight of (B) a compound represented by the following General Formula (1) and from 0.005 to 0.5 parts by weight of (C) a fatty acid metal salt, wherein a weight ratio of a metal element contained in the component (C) to the component (B) is 100 ppm or more and 5000 ppm or less.

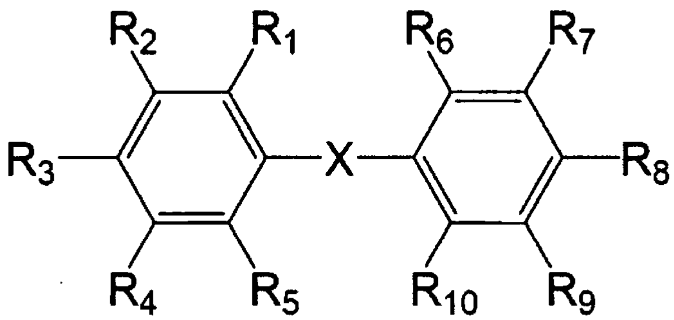

(1)

(In General Formula (1), X is one kind of bond selected from amine, ketone, ether, and sulfonyl. $R_1$ to $R_{10}$ may be the same or different and each represent any one selected from hydrogen, a halogen atom, a hydroxyl group, an amino group, a cyano group, a nitro group, an alkyl group having from 1 to 10 carbon atoms, and an alkoxy group having from 1 to 4 carbon atoms.)

Citation List

Patent Document

Patent Document 1: JP 2021-008591 A

Summary of Invention

Technical Problem

However, with an increasing demand for a polyamide resin, a polyamide resin material having excellent insulation properties is further required. In particular, there is a demand for an insulating material having excellent insulation properties under high withstand voltage and excellent mechanical strength.

The present invention is directed to solving such issues and providing a high withstand voltage insulating material excellent in mechanical strength, and a high withstand voltage insulating molded article.

Solution to Problem

As a result of studies conducted by the present inventor(s) to solve the above-described issues, those issues

have been solved by the following means.

<1> A high withstand voltage insulating material, including a polyamide resin (A) including a structural unit containing a ring (a) selected from the group consisting of a benzene ring, a naphthalene ring, and a cyclohexane ring, wherein a content ratio of the ring (a) on a molecular weight basis in the polyamide resin (A) is from 10 to 60 mass%, and the polyamide resin (A) satisfies Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.
<2> The high withstand voltage insulating material according to <1>, wherein the content ratio of the ring (a) on a molecular weight basis in the polyamide resin (A) is from 10 to 40 mass%.
<3> The high withstand voltage insulating material according to <1> or <2>, wherein a value for B in Formula (A) is from 0.8 to 3.2.
<4> The high withstand voltage insulating material according to any one of <1> to <3>, wherein a value for C in Formula (A) is from 1.0 to 3.0.
<5> The high withstand voltage insulating material according to any one of <1> to <4>, wherein the structural unit containing the ring (a) includes a structural unit represented by Formula (X):

Formula (X)

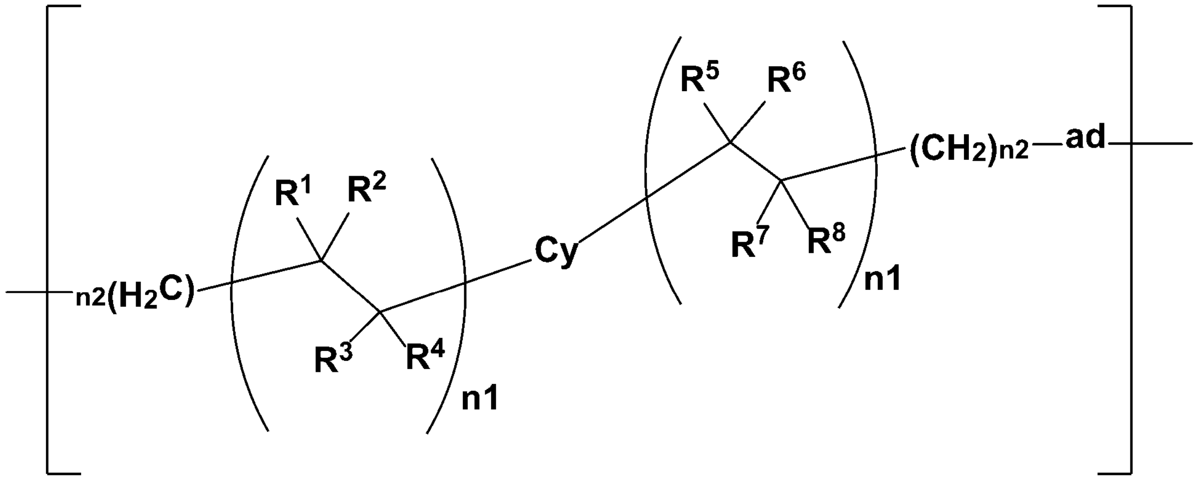

where in Formula (X), $R^1$ to $R^8$ each independently represent a hydrogen atom or an aliphatic group having from 1 to 5 carbon atoms. Cy represents a benzene ring, a naphthalene ring, or a cyclohexane ring. n1 is each independently an integer of from 0 to 2, and n2 is each independently 0 or 1. ad represents an amide bond.
<6> The high withstand voltage insulating material according to any one of <1> to <5>, wherein the polyamide resin (A) includes a diamine-derived structural unit and a dicarboxylic acid-derived structural unit, and 30 mol% or more of the diamine-derived structural unit includes a structural unit containing the ring (a).
<7> The high withstand voltage insulating material according to any one of <1> to <5>, wherein the polyamide resin (A) includes a diamine-derived structural unit and a dicarboxylic acid-derived structural unit, and 70 mol% or more of the diamine-derived structural unit includes a structural unit containing the ring (a).
<8> The high withstand voltage insulating material according to any one of <1> to <7>, wherein the polyamide resin (A) includes a diamine-derived structural unit and a dicarboxylic acid-derived structural unit, and the diamine-derived structural unit includes a diamine-derived structural unit represented by Formula (Y):

Formula (Y)

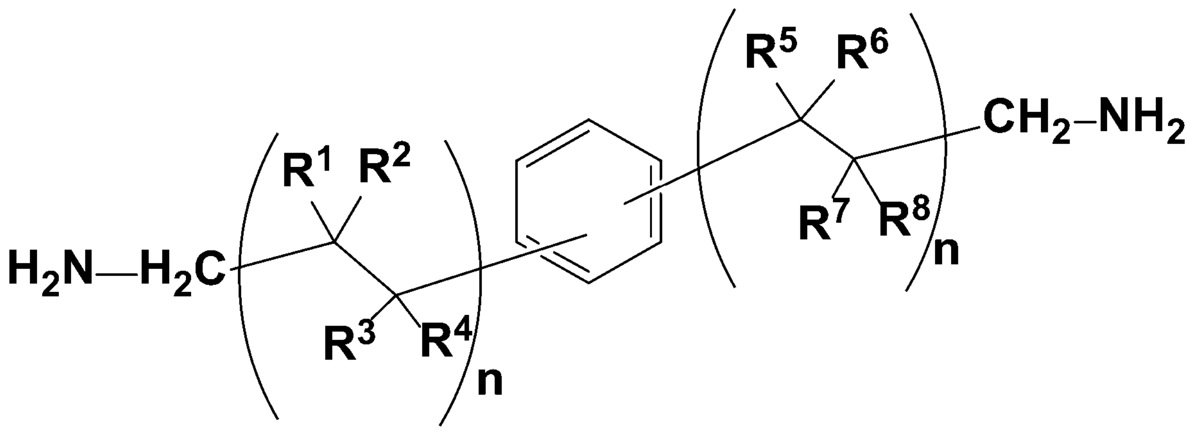

where in Formula (Y), $R^1$ to $R^8$ each independently represent a hydrogen atom or an aliphatic group having from 1 to 5 carbon atoms. n is each independently an integer of from 0 to 2.

<9> The high withstand voltage insulating material according to any one of <1> to <8>, wherein the polyamide resin (A) includes a diamine-derived structural unit and a dicarboxylic acid-derived structural unit, and the diamine-derived structural unit includes a structural unit derived from a xylylenediamine.

<10> The high withstand voltage insulating material according to any one of <1> to <9>, wherein the polyamide resin (A) includes a diamine-derived structural unit and a dicarboxylic acid-derived structural unit, and 30 mol% or more of the dicarboxylic acid-derived structural unit includes a structural unit derived from an aliphatic dicarboxylic acid having from 4 to 20 carbon atoms.

<11> The high withstand voltage insulating material according to any one of <1> to <10>, wherein the polyamide resin (A) includes a diamine-derived structural unit and a dicarboxylic acid-derived structural unit, and 70 mol% or more of the dicarboxylic acid-derived structural unit includes a structural unit derived from an aliphatic dicarboxylic acid having from 4 to 20 carbon atoms.

<12> The high withstand voltage insulating material according to any one of <1> to <11>, wherein the polyamide resin (A) includes a diamine-derived structural unit and a dicarboxylic acid-derived structural unit, and the dicarboxylic acid-derived structural unit includes at least one selected from adipic acid, sebacic acid, and dodecanedioic acid.

<13> The high withstand voltage insulating material according to any one of <1> to <12>, wherein the polyamide resin (A) includes a diamine-derived structural unit and a dicarboxylic acid-derived structural unit, 70 mol% or more of the diamine-derived structural unit includes a structural unit derived from a xylylenediamine, and 70 mol% or more of the dicarboxylic acid-derived structural unit includes at least one selected from adipic acid, sebacic acid, and dodecanedioic acid.

<14> The high withstand voltage insulating material according to any one of <1> to <13>, further including a stabilizer.

<15> The high withstand voltage insulating material according to any one of <1> to <14>, wherein a time it takes for the insulating material to break down at a voltage of 2000 V in accordance with a JIS-C2136 constant voltage tracking method is 30 minutes or more.

<16> A high withstand voltage insulating molded article formed from the high withstand voltage insulating material according to any one of <1> to <15>.

<17> A use of a polyamide resin (A) for a high withstand voltage insulating material, the polyamide resin (A) including a structural unit containing a ring (a) selected from the group consisting of a benzene ring, a naphthalene ring, and a cyclohexane ring, a content ratio of the ring (a) on a molecular weight basis in the polyamide resin (A) being from 10 to 60 mass%, and the polyamide resin (A) satisfying Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

<18> A method for producing a high withstand voltage insulating part, the method including melt-kneading a polyamide resin (A) with another component and then molding,

the polyamide resin (A) including a structural unit containing a ring (a) selected from the group consisting of a benzene ring, a naphthalene ring, and a cyclohexane ring, a content ratio of the ring (a) on a molecular weight basis in the polyamide resin (A) being from 10 to 60 mass%, and the polyamide resin (A) satisfying Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

## Advantageous Effects of Invention

According to the present invention, a high withstand voltage insulating material and a high withstand voltage insulating molded article, which are excellent in mechanical strength, are provided.

## Brief Description of Drawings

FIG. 1 is a diagram illustrating a relationship between Formula (A) and a tracking resistance time in each of Examples and Comparative Examples.

## Description of Embodiments

Embodiments for carrying out the present invention (hereinafter referred to simply as "the present embodiment") will next be described in detail. The present embodiment described below is an example for describing the present invention, and the present invention is not limited only to the present embodiment.

In the present specification, numerical values described before and after the term "to" are respectively the lower limit and the upper limit of a range including the numerical values.

In the present specification, various physical property values and characteristic values are those at 23°C unless otherwise noted.

In a description of a group (atomic group) in the present specification, a description not specifying whether the group is a substituted group or an unsubstituted group is meant to include a group (atomic group) having a substituent as well as a group (atomic group) having no substituent. For example, an "alkyl group" includes not only an alkyl group having no substituent (unsubstituted alkyl group) but also an alkyl group having a substituent (substituted alkyl group). In the present specification, a notation that does not indicate substitution or no substitution preferably means unsubstituted one.

When the measurement methods or the like described in the standards found in the present specification differ depending on the year, the measurement methods or the like are based on the standards as of January 1, 2022, unless otherwise stated.

A high withstand voltage insulating material of the present embodiment includes a polyamide resin (A) including a structural unit containing a ring (a) selected from the group consisting of a benzene ring, a naphthalene ring, and a cyclohexane ring, in which a content ratio of the ring (a) on a molecular weight basis in the polyamide resin (A) is from 10 to 60 mass%, and the polyamide resin (A) satisfies Formula (A).

$$1.0 \leq [B/(A \times C)] \times 100 \leq 5.0 \cdots (A)$$

(In Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.)

With such a configuration, a high withstand voltage insulating material excellent in mechanical strength can be obtained.

In general, a resin having many ring structures such as an aromatic ring tends to improve the mechanical strength such as a flexural modulus of a resulting molded article. On the other hand, a resin having many ring structures such as an aromatic ring tends to deteriorate insulation properties (for example, tracking resistance). Specifically, as the number of ring structures increases, a carbonized conductive path is more likely to be formed in the resin, and the insulation properties tend to deteriorate. Among the ring structures, particularly when an aromatic ring is included, the tendency is remarkable. In the present embodiment, in spite of using a polyamide resin including a ring structure such as an aromatic ring, it has succeeded in preventing deterioration of insulating properties, particularly the tracking resistance under high voltage.

That is, the present embodiment was able to provide:

A: the content ratio (mass%) of the ring (a) on a molecular weight basis in the polyamide resin (A),
B: the average value of the number of bonds between the ring (a) and an amide bond closest to the ring (a) in each structural unit, and
C: the average value of the number of bonds between positions where a group connected from the amide bond is bonded to the ring (a) in each structural unit are precisely adjusted to adjust the ratio of the ring (a) in the structural unit, the size of the structural unit, and the like, and an insulating material having excellent mechanical strength and high withstand voltage.

The polyamide resin (A) in the present embodiment includes the ring (a) selected from the group consisting of a benzene ring, a naphthalene ring, and a cyclohexane ring. The inclusion of the ring (a) can improve the mechanical strength such as a flexural modulus. The number of rings (a) per structural unit of the polyamide resin (A) is not particularly limited as long as the content ratio of the ring (a) on a molecular weight basis in the polyamide resin (A) is satisfied, and may be one or two or more. The number (average value) of rings (a) per structural unit is preferably from 0.9 to 2.5, more preferably from 0.9 to 2.0, still more preferably from 0.9 to 1.7, even more preferably from 0.9 to 1.4, and further more preferably from 0.9 to 1.1.

The benzene ring, the naphthalene ring, and the cyclohexane ring may have a substituent, and preferably have no substituent. In the case of having the substituent, a hydrocarbon group having from 1 to 3 carbon atoms and a halogen atom are exemplified. In addition, an embodiment having no phenolic hydroxyl group as a substituent is exemplified.

In the present embodiment, the ring (a) preferably contains a benzene ring or a naphthalene ring, and more preferably contains a benzene ring. By containing a benzene ring or a naphthalene ring, particularly a benzene ring, there is a tendency that the mechanical strength is further improved, and a decrease in the high withstand voltage insulation properties can be more effectively suppressed.

In the present embodiment, the content ratio of the ring (a) on a molecular weight basis in the polyamide resin (A) is from 10 to 60 mass%. With the content ratio being equal to or more than the above lower limit, the mechanical strength can be further improved. With the content ratio being equal to or less than the upper limit, the high withstand voltage insulation properties tends to further improve. Here, the content ratio on a molecular weight basis means a formula weight of the ring structure with respect to the formula weight of each structural unit (molecular weight when the structural unit is assumed to be a molecule). For example, in the case of a polyamide resin (polyamide MXD6) including the following structural unit, the compositional formula of the structural unit is $(76.1/246.3) \times 100 \approx 30.9$ mass% since a portion derived from adipic acid is $C_6H_8O_2$, a portion derived from meta-xylylenediamine is $C_8H_{10}N_2$, the formula weight of the structural unit is 246.3, and the compositional formula derived from the ring (a) (benzene ring) is $C_6H_4$ and 76.1. When the ring structure has a substituent, the molecular weight of the ring structure does not include the substituent. For example, when the structural unit of dicarboxylic acid is derived from 5-hydroxyisophthalic acid, the compositional formula derived from 5-hydroxyisophthalic acid is $C_8H_4O_3$; however, the compositional formula derived from the ring (a) (benzene ring) not containing a substituent is $C_6H_3$ and 75.1.

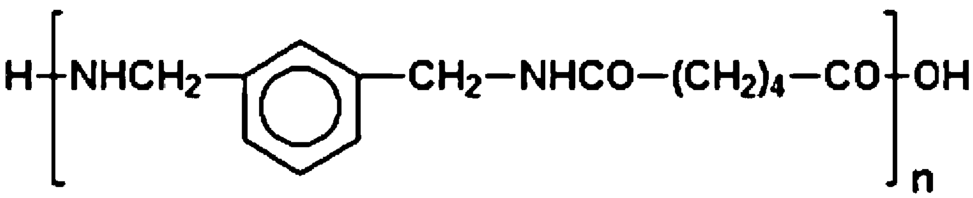

The content ratio (that is, A of Formula (A) described later in detail) of the ring (a) on a molecular weight basis in the polyamide resin (A) is 10 mass% or more, preferably 14 mass% or more, more preferably 16 mass% or more, still more preferably 18 mass% or more, even more preferably 20 mass% or more, and further more preferably 22 mass% or more,

and the content ratio may be 24 mass% or more or 26 mass% or more depending on the application and the like. With the content ratio being equal to or more than the above lower limit, the mechanical strength of the obtained molded article tends to further improve. The content ratio of the ring (a) on a molecular weight basis in the polyamide resin (A) is 60 mass% or less, preferably 50 mass% or less, more preferably 45 mass% or less, still more preferably 40 mass% or less, even more preferably 35 mass% or less, and further more preferably 33 mass% or less, and the content ratio may be 32 mass% or less or less than 32 mass% depending on the application and the like. With the content ratio being equal to or less than the upper limit, the insulation properties under a high withstand voltage tends to further improve.

The high withstand voltage insulating material of the present embodiment may contain only one type of the polyamide resin (A) or may contain two or more types thereof. When two or more types of the polyamide resins (A) are contained, the sum of values obtained by multiplying the content ratio of the ring (a) on a molecular weight basis in each of the polyamide resins (A) by a mass fraction is used.

The polyamide resin (A) in the present embodiment satisfies Formula (A).

$$1.0 \leq [B/(A \times C)] \times 100 \leq 5.0 \cdots (A)$$

(In Formula (A), A represents the content ratio (mass%) of the ring (a) on a molecular weight basis in the polyamide resin (A), B represents the average value of the number of bonds between the ring (a) and an amide bond closest to the ring (a) in each structural unit, and C represents the average value of the number of bonds between positions where a group connected from the amide bond is bonded to the ring (a) in each structural unit.)

The value of $[B/(A \times C)] \times 100$ is preferably 1.0 or more, more preferably 1.7 or more, still more preferably 2.3 or more, even more preferably 2.7 or more, and further more preferably 3.1 or more. With the value being equal to or more than the above lower limit, the tracking resistance time under the high voltage condition tends to further improve. The value of $[B/(A \times C)] \times 100$ is preferably 5.0 or less, more preferably 4.1 or less, still more preferably 3.9 or less, even more preferably 3.6 or less, and further more preferably 3.4 or less. With the value being equal to or less than the above upper limit, a flexural modulus per tracking resistance time represented by Formula (B) tends to further improve.

$$\text{Flexural modulus per tracking resistance time } [(\text{GPa/min}) \times 100] = (\text{flexural modulus/tracking resistance time}) \times 100 \cdots (B)$$

If the tracking resistance times of the polyamide resins (A) different from each other are the same, the higher the flexural modulus per tracking resistance time, the higher the value of the flexural modulus, which means that mechanical properties are excellent. That is, it means that the higher the flexural modulus per tracking resistance time, the more excellent the performance of mechanical properties from the viewpoint of the tracking resistance.

As described above, the polyamide resin (A) satisfying Formula (A) achieves both the tracking resistance under a high voltage and the mechanical properties at a high level.

It is presumed that the following mechanism works.

In the amide bond and the aromatic ring, electrons are delocalized in each unit; however, the bond therebetween inhibits delocalization between the units. However, when a high voltage is applied, the inhibition is overcome, interaction is facilitated, and the formation of the carbonized conductive path is promoted. As the number of bonds increases, this inhibitory effect increases, and the tracking resistance time increases. In the cyclohexane ring, delocalization of electrons in the unit does not occur; however, it is presumed that a mechanism similar to that in the case of the aromatic ring acts.

Here, as described above, A is the content ratio (mass%) of the ring (a) on a molecular weight basis in the polyamide resin (A), and as the numerical value is larger, the ratio of the ring (a) is higher, and a carbonized conductive path is more likely to be formed. That is, in the present embodiment, it is desirable that A be small as long as the mechanical strength is not lowered.

Here, B represents the average value of the number of bonds between the ring (a) and the amide bond closest to the ring (a) in each structural unit. For example, since the MXD6 has a structure of an amide bond-$CH_2$-benzene ring, the number of bonds between the ring (a) and the amide bond closest to the ring (a) is 2. For example, when the value of B is Formula (X) described later in detail, the value is the number of bonds between Cy (corresponding to the ring (a)) and ad (amide bond) in a portion surrounded by a square found below, and therefore, the value is 4 when n1 and n2 are 1.

Formula (X)

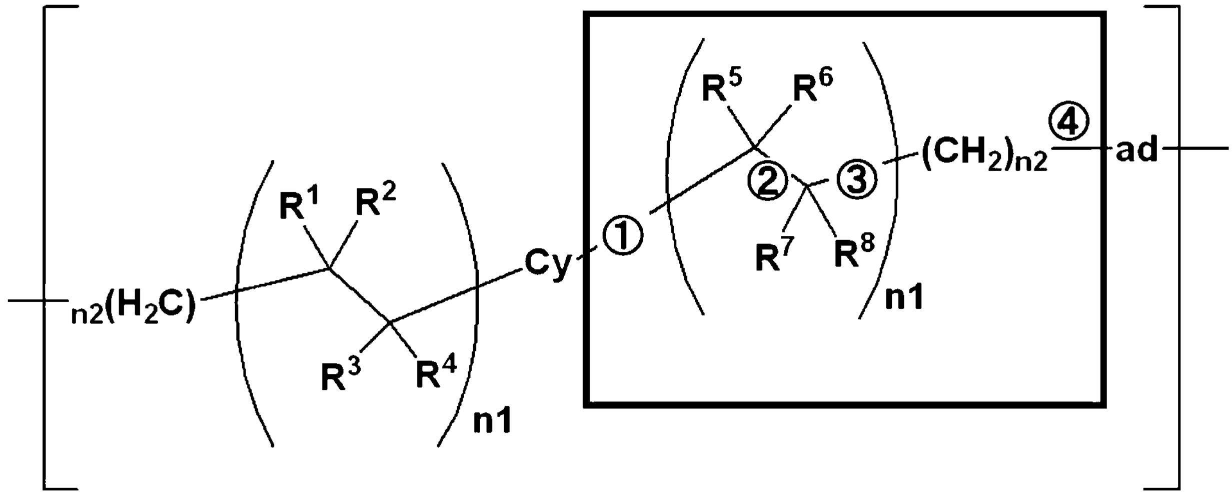

(In Formula (X), $R^1$ to $R^8$ each independently represent a hydrogen atom or an aliphatic group having from 1 to 5 carbon atoms. Cy represents a benzene ring, a naphthalene ring, or a cyclohexane ring. n1 is each independently an integer of from 0 to 2, and n2 is each independently 0 or 1. ad represents an amide bond.)

The value of B is usually 0.5 or more, preferably 0.8 or more, more preferably 1.0 or more, still more preferably 1.1 or more, even more preferably 1.5 or more, and further more preferably 1.8 or more. With the value being equal to or more than the above lower limit, the tracking resistance time under the high voltage condition tends to further improve. Although it is merely a presumption, when the value of B is small, the amide bond and the ring (a) in which electrons are delocalized easily interact with each other in the molecule at a high voltage, and a carbonized conductive path is easily formed. That is, the larger the value of B is, the better.

The value of B is preferably 4.0 or less, more preferably 3.5 or less, still more preferably 3.0 or less, even more preferably 2.5 or less, and further more preferably 2.2 or less. With the value being equal to or less than the upper limit, the flexural modulus tends to further improve.

Here, C represents the average value of the number of bonds between positions where a group connected from the amide bond is bonded to the ring (a) in each structural unit. For example, in MXD6, the group connected from an amide bond means a portion of an amide bond $-CH_2-$. Thus, since the number of bonds between the two amide bonds $-CH_2-$ corresponds to portions of 1 and 2 as described below, C is 2.

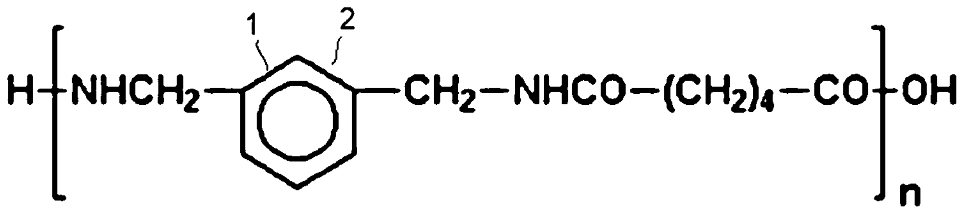

Although it is merely a presumption, when the value of C increases, linearity of the molecules of the polyamide resin (A) increases, and the ring (a) is easily arranged neatly between the molecules. It is presumed that as a result, the ring (a) easily interacts and reacts between molecules, and a carbonized conductive path is easily formed. In the present embodiment, since it is desirable that the ring (a) is not arranged neatly, the value of C is preferably small.

When the ring (a) is a benzene ring or a cyclohexane ring, the value (average value) of C is 3.0 or less, preferably less than 3.0, more preferably 2.5 or less, still more preferably 2.3 or less, and even more preferably 2.1 or less. With the value being equal to or less than the upper limit, the effect of the flexural modulus tends to further improve. The lower limit of the value of C is preferably 1.0 or more, more preferably 1.3 or more, still more preferably 1.5 or more, and even more preferably 1.8 or more. With the value being equal to or more than the above lower limit, the tracking resistance time tends to further improv.

Hereinafter, the structure of the polyamide resin (A) used in the present embodiment will be specifically described.

In the present embodiment, the structural unit containing the ring (a) preferably contains a structural unit represented by Formula (X). Only one or two or more structural unit(s) represented by Formula (X) may be contained.

Formula (X)

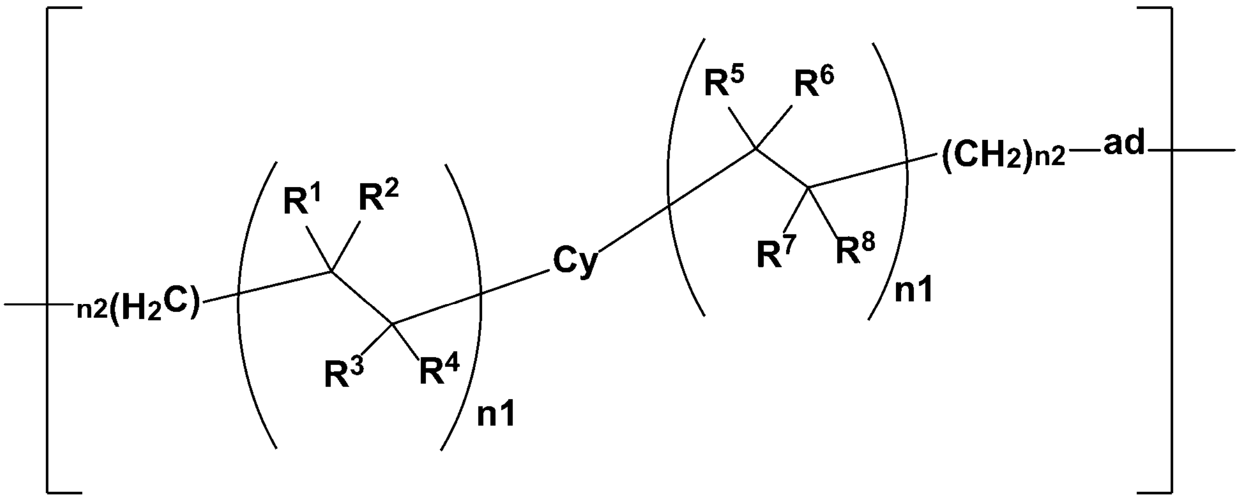

(In Formula (X), $R_1$ to $R^8$ each independently represent a hydrogen atom or an aliphatic group having from 1 to 5 carbon atoms. Cy represents a benzene ring, a naphthalene ring, or a cyclohexane ring. n1 is each independently an integer of from 0 to 2, and n2 is each independently 0 or 1. ad represents an amide bond.)

In Formula (X), $R^1$ to $R^8$ each independently represent a hydrogen atom or an aliphatic group having from 1 to 5 carbon atoms, and are each independently preferably a hydrogen atom or a methyl group.

In Formula (X), Cy represents a benzene ring, a naphthalene ring, or a cyclohexane ring, and is preferably a benzene ring or a naphthalene ring, more preferably a benzene ring.

In Formula (X), n1's are each independently an integer of from 0 to 2.

A first example of n1 is that n1 is 0.

A second example of n1 is that n1 is 1.

A third example of n1 is that n1 is 2.

The first to third examples of n1 are appropriately selected depending on the application and the like.

In Formula (X), n2 is 0 or 1.

A first example of n2 is that n2 is 0.

A second example of n2 is that n2 is 1.

The first to second examples of n2 are appropriately selected depending on the application and the like.

In Formula (X), it is preferable that n1 is 0 and n2 is 1, and/or n1 is 1 and 2 is 1.

In Formula (X), Cy is preferably connected so as to be at the para position or the meta position.

In the present embodiment, the polyamide resin (A) includes a diamine-derived structural unit and a dicarboxylic acid-derived structural unit, it is preferable that 30 mol% or more of the diamine-derived structural unit contains the structural unit containing the ring (a) (for example, a diamine-derived structural unit represented by Formula (Y), and a structural unit derived from a xylylenediamine), it is more preferable that 70 mol% or more of the diamine-derived structural unit contains the structural unit containing the ring (a), it is still more preferable that 80 mol% or more of the diamine-derived structural unit contains the structural unit containing the ring (a), it is even more preferable that 90 mol% or more of the diamine-derived structural unit contains the structural unit containing the ring (a), and it is further more preferable that 95 mol% or more of the diamine-derived structural unit contains the structural unit containing the ring (a).

In the present embodiment, it is preferable that the polyamide resin (A) contains a diamine-derived structural unit and a dicarboxylic acid-derived structural unit, and the diamine-derived structural unit contains a diamine-derived structural unit represented by Formula (Y).

Formula (Y)

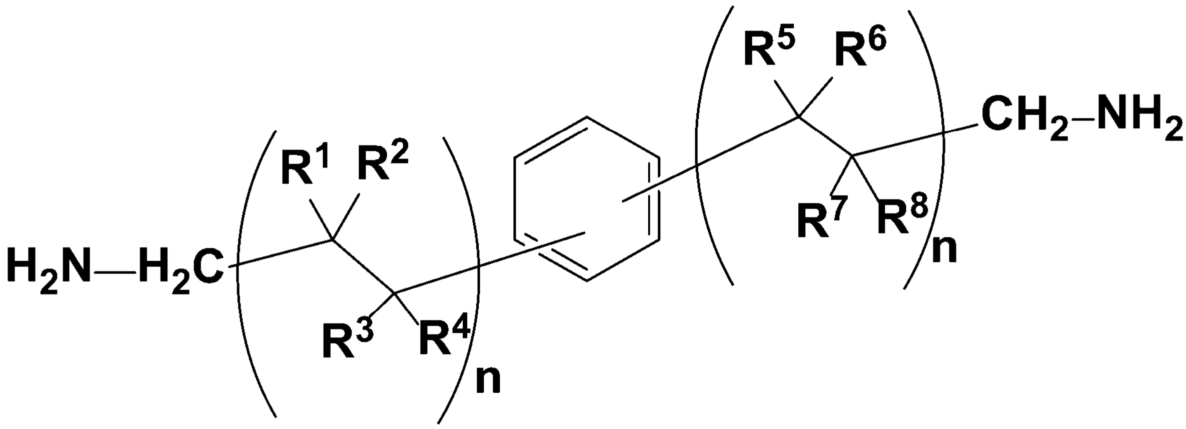

(In Formula (Y), $R^1$ to $R^8$ each independently represent a hydrogen atom or an aliphatic group having from 1 to 5 carbon atoms. n is each independently an integer of from 0 to 2.)

$R^1$ to $R^8$ in Formula (Y) are synonymous with $R^1$ to $R^8$ in Formula (X), and the preferred range is also the same.

In Formula (Y), n's are each independently an integer of from 0 to 2.

A first example of n is that n is 0.

A second example of n is that n is 1.

A third example of n is that n is 2.

The first to third examples of n are appropriately selected depending on the application and the like.

In Formula (y), the benzene ring is preferably a ring having the substituent (aminoalkyl group) at the para position or the meta position.

When the structural unit containing the ring (a) is a diamine-derived structural unit, examples of the diamine constituting the diamine-derived structural unit include a xylylenediamine, benzenediethanamine, benzenedipropanamine, and bisaminomethylcyclohexane, a xylylenediamine and/or benzenediethanamine are preferable, and a xylylenediamine is more preferable. The preferred ratio of these diamines in the diamine-derived structural unit is as described above.

The xylylenediamine is more preferably meta-xylylenediamine and/or para-xylylenediamine. A molar ratio (m/p) of meta-xylylenediamine and para-xylylene in xylylenediamine is preferably from 100 to 10/from 0 to 90, more preferably from 100 to 30/from 0 to 70, still more preferably from 100 to 60/from 0 to 40, and even more preferably from 100 to 90/from 0 to 10. With such a configuration, the high withstand voltage insulation properties tend to further improve.

The benzenediethanamine is preferably m-benzenediethanamine and/or p-benzenediethanamine, and more preferably p-benzenediethanamine. With such a configuration, the high withstand voltage insulation properties tend to further improve.

The benzenedipropanamine is preferably m-benzenedipropanamine and/or p-benzenedipropanamine, and more preferably p-benzenedipropanamine. With such a configuration, the high withstand voltage insulation properties tend to further improve.

The bisaminomethylcyclohexane is preferably 1,3-bisaminomethylcyclohexane and/or 1,4-bisaminomethylcyclohexane, more preferably 1,3-bisaminomethylcyclohexane.

In the polyamide resin (A) to be used in the present embodiment, when the diamine-derived structural unit contains the structural unit containing the ring (a) and/or when the dicarboxylic acid-derived structural unit contains the structural unit containing the ring (a), as the diamine constituting the structural unit other than the structural unit containing the ring (a), a well-known chain aliphatic diamine can be widely adopted, an aliphatic diamine having from 6 to 12 carbon atoms is preferable, and examples thereof include linear aliphatic diamines, such as 1,6-hexanediamine, 1,7-heptanediamine, 1,8-octanediamine, 1,9-nonanediamine, 1,10-decanediamine, 1,11-undecanediamine, and 1,12-dodecanediamine; and branched chain aliphatic diamines, such as 2-methyl-1,8-octanediamine, 4-methyl-1,8-octanediamine, 5-methyl-1,9-nonanediamine, 2,2,4-/2,4,4-trimethylhexamethylenediamine, 2-methyl-1,5-pentanediamine, 2-methyl-1,6-hexanediamine, and 2-methyl-1,7-heptanediamine.

In the present embodiment, when the polyamide resin (A) includes a diamine-derived structural unit and a dicarboxylic acid-derived structural unit, and the diamine-derived structural unit includes the structural unit containing the ring (a), the dicarboxylic acid-derived structural unit may be a structural unit not containing the ring (a) or a structural unit containing the ring (a).

In the present embodiment, the polyamide resin (A) includes a diamine-derived structural unit and a dicarboxylic acid-derived structural unit, it is preferable that 30 mol% or more of the dicarboxylic acid-derived structural unit contains a

structural unit derived from an aliphatic dicarboxylic acid having from 4 to 20 carbon atoms, it is more preferable that 70 mol% or more of the dicarboxylic acid-derived structural unit contains a structural unit derived from an aliphatic dicarboxylic acid having from 4 to 20 carbon atoms, it is still more preferable that 80 mol% or more of the dicarboxylic acid-derived structural unit contains a structural unit derived from an aliphatic dicarboxylic acid having from 4 to 20 carbon atoms, it is even more preferable that 90 mol% or more of the dicarboxylic acid-derived structural unit contains a structural unit derived from an aliphatic dicarboxylic acid having from 4 to 20 carbon atoms, and it is further more preferable that 95 mol% or more of the dicarboxylic acid-derived structural unit contains a structural unit derived from an aliphatic dicarboxylic acid having from 4 to 20 carbon atoms.

Examples of the aliphatic dicarboxylic acid having from 4 to 20 carbon atoms include succinic acid, glutaric acid, adipic acid, pimelic acid, suberic acid, azelaic acid, sebacic acid, and dodecanedioic acid. At least one of adipic acid, sebacic acid, or dodecanedioic acid is more preferably contained, and adipic acid and/or sebacic acid (preferably adipic acid) is still more preferably contained.

In the present embodiment, it is also preferable that the polyamide resin (A) includes a diamine-derived structural unit and a dicarboxylic acid-derived structural unit, and 30 mol% or more of the dicarboxylic acid-derived structural unit includes a structural unit derived from an aromatic dicarboxylic acid containing the ring (A). In such an embodiment, the polyamide resin (A) includes a diamine-derived structural unit and a dicarboxylic acid-derived structural unit, it is more preferable that 70 mol% or more of the dicarboxylic acid-derived structural unit contains a structural unit derived from an aromatic dicarboxylic acid containing the ring (A), it is still more preferable that 80 mol% or more of the dicarboxylic acid-derived structural unit contain a structural unit derived from an aromatic dicarboxylic acid containing the ring (A), it is even more preferable that 90 mol% or more of the dicarboxylic acid-derived structural unit containing the ring (A) contains a structural unit derived from an aromatic dicarboxylic acid containing the ring (A), and it is further more preferable that 95 mol% or more of the dicarboxylic acid-derived structural unit containing the ring (A) contains a structural unit derived from an aromatic dicarboxylic acid containing the ring (A).

Examples of the aromatic dicarboxylic acid containing the ring (A) include isophthalic acid, terephthalic acid, orthophthalic acid, phenylenediacetic acids (o-phenylenediacetic acid, p-phenylenediacetic acid, and m-phenylenediacetic acid), and naphthalenedicarboxylic acids (1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid).

Among these, the aromatic dicarboxylic acid is preferably selected from isophthalic acid, terephthalic acid, and phenylenediacetic acids (preferably, p-phenylenediacetic acid), and is more preferably terephthalic acid.

When the polyamide resin (A) contains a diamine-derived structural unit and a dicarboxylic acid-derived structural unit, and 30 mol% or more of the dicarboxylic acid-derived structural unit contains the structural unit derived from an aromatic dicarboxylic acid containing the ring (A), the diamine-derived structural unit may or may not contain the structural unit derived from an aromatic dicarboxylic acid containing the ring (A).

The polyamide resin (A) to be used in the present embodiment preferably includes a dicarboxylic acid-derived structural unit and a diamine-derived structural unit, and may also contain structural units other than the dicarboxylic acid-derived structural unit and the diamine-derived structural unit and other moieties such as terminal groups. Examples of the additional structural unit include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. In addition, the polyamide resin (A) used in the present embodiment may include trace amounts of components such as additives used for synthesis.

The polyamide resin (A) used in the present embodiment preferably includes 70 mass% or more, more preferably 80 mass% or more, still more preferably 90 mass% or more, even more preferably 95 mass% or more, and further more preferably 98 mass% or more of the dicarboxylic acid-derived structural unit and the diamine-derived structural unit.

The terminal group of the polyamide resin (A) used in the present embodiment is preferably an amino group ($-NH_2$) or a carboxylic acid group (-COOH). The polyamide resin (A) may be sealed with a terminal blocking agent, and the terminal blocking agent preferably has 8 or less carbon atoms.

A first embodiment of the polyamide resin (A) to be used in the present embodiment includes a diamine-derived structural unit and a dicarboxylic acid-derived structural unit, 70 mol% or more of the diamine-derived structural unit includes the diamine-derived structural unit represented by Formula (Y), and 70 mol% or more of the dicarboxylic acid-derived structural unit contains at least one of adipic acid, sebacic acid, or dodecanedioic acid.

A second embodiment of the polyamide resin (A) to be used in the present embodiment includes a diamine-derived structural unit and a dicarboxylic acid-derived structural unit, 70 mol% or more of the diamine-derived structural unit includes the diamine-derived structural unit represented by Formula (Y), and 70 mol% or more of the dicarboxylic acid-derived structural unit contains adipic acid and/or sebacic acid.

The diamine represented by Formula (Y) is preferably meta-xylylenediamine, para-xylylenediamine, para-benzenediethanamine, or 1,3-bisaminomethylcyclohexane, and more preferably meta-xylylenediamine and/or para-xylylenediamine.

The polyamide resin (A) used in the present embodiment preferably has no imide group. That is, the polyamide resin (A) is preferably not polyamideimide.

The polyamide resin (A) in the high withstand voltage insulating material of the present embodiment preferably has a moisture content (hereinafter, may be referred to as "humidity control moisture content") of 1 mass% or more as measured in accordance with the moisture vaporization method of JIS K 7251 after storing the polyamide resin (A) in an environment of 85°C/85% RH for 300 hours. With the moisture content being equal to or more than the above lower limit, resistance to a highly lipophilic solvent such as gasoline tends to improve. The humidity control moisture content of the polyamide resin (A) in the high withstand voltage insulating material of the present embodiment is preferably 8 mass% or less. With the humidity control moisture content being equal to or less than the upper limit, resistance to an acid or an alkali tends to improve.

The formula weight (average value) of the structural unit of the polyamide resin (A) used in the present embodiment is preferably 200 or more, and more preferably 220 or more. This tends to improve stability of a melt viscosity during molding processing. The formula weight is preferably 500 or less, more preferably 350 or less, and still more preferably 280 or less. This tends to improve mechanical strength. The amount of the structural unit of which the formula weight is within the above range is preferably 95 mass% or more, more preferably 98 mass% or more, and still more preferably 99 mass% or more of all the structural units.

The number average molecular weight (Mn) of the polyamide resin used in the present embodiment is preferably 8000 or more, and preferably 50000 or less, more preferably 30000 or less.

In the measurement of the number average molecular weight (Mn) of the polyamide resin, the number average molecular weight can be determined by gel permeation chromatography (GPC) analysis based on calibration with standard polymethylmethacrylate (PMMA). Two columns, in which a styrene-based polymer is charged as a filler is used as columns. Hexafluoroisopropanol (HFIP) having a sodium trifluoroacetate concentration of 2 mmol/L is used as a solvent. Thus, the measurement is performed using a resin concentration of 0.02 mass%, a column temperature of 40°C, a flow rate of 0.3 mL/min, and using a refractive index detector (RI). In addition, the calibration curve is measured by dissolving 6 levels of PMMA in HFIP.

A glass transition temperature of the polyamide resin (A) used in the present embodiment is preferably 30°C or higher and preferably 100°C or lower.

The polyamide resin (A) used also in the present embodiment may be a crystalline resin or an amorphous resin, but is preferably a crystalline resin.

The melting point of the polyamide resin (A) used in the present embodiment is preferably 180°C or higher and preferably 350°C or lower.

In the present specification, the melting point (Tm) and the glass transition temperature (Tg) are values obtained by differential scanning calorimetry (DSC) in accordance with JIS K7121 and K7122, unless otherwise specified.

Specifically, a differential scanning calorimeter is used. The synthesized polyamide resin is crushed and placed into a measuring pan of the differential scanning calorimeter, and then heated under a nitrogen atmosphere to a temperature of 20°C higher than the melting point found in Table 1 at a temperature increase rate of 10°C/min. Immediately after the temperature increase is completed, the measurement pan is removed and rapidly cooled by being pressed against dry ice, and then measurement is performed. As the measurement conditions, the temperature is increased to a temperature of 20°C higher than the melting point at a temperature increase rate of 10°C/min, and then maintained at that temperature for 5 minutes, after which the temperature is reduced to 100°C at a temperature decrease rate of -5°C/min, and measurements are then carried out to determine the melting point (Tm) and the glass transition temperature (Tg).

The "DSC-60" available from Shimadzu Corporation can be used as the differential scanning calorimeter.

When the high withstand voltage insulating material used in the present embodiment contains two or more polyamide resins (A), the sum of values obtained by multiplying each of the above physical property values by the mass fraction of the polyamide resin (A) is used.

The content of the polyamide resin (A) in the high withstand voltage insulating material of the present embodiment is not particularly limited. An example of the high withstand voltage insulating material of the present embodiment is that a ratio of the polyamide resin (A) in the high withstand voltage insulating material is 90 mass% or more, preferably 95 mass% or more. Another example of the high withstand voltage insulating material of the present embodiment is that a total ratio of the polyamide resin (A) and the filler in the high withstand voltage insulating material is 90 mass% or more, preferably 95 mass% or more.

The high withstand voltage insulating material of the present embodiment may or may not contain a polyamide resin other than the polyamide resin (A).

When the polyamide resin other than the polyamide resin (A) is contained, the other polyamide resin that can be contained in the high withstand voltage insulating material of the present embodiment may be an aliphatic polyamide resin or a semi-aromatic polyamide resin.

Examples of the aliphatic polyamide resin include polyamide 6, polyamide 66, polyamide 46, polyamide 6/66

(copolymer of a polyamide 6 component and a polyamide 66 component), polyamide 610, polyamide 612, polyamide 410, polyamide 1010, polyamide 11, polyamide 12, and polyamide 9C (a polyamide formed from a mixed diamine of 1,9-nonanediamine and 2-methyl-1,8-octanediamine and 1,4-cyclohexanedicarboxylic acid).

When the high withstand voltage insulating material of the present embodiment contains a polyamide resin other than the polyamide resin (A), the content thereof is preferably from 1 to 10 mass% with respect to 100 mass% of the polyamide resin (A). Only one kind of polyamide resin other than the polyamide resin (A) may be contained, or two or more kinds thereof may be contained.

In addition, the high withstand voltage insulating material of the present embodiment preferably does not substantially contain a polyamide resin other than the polyamide resin (A). The phrase "contain substantially no" means that the content of the polyamide resin other than the polyamide resin (A) is less than 1 mass% with respect to 100 mass% of the polyamide resin (A), and the content is preferably less than 0.1 mass%, and more preferably less than 0.01 mass%.

The high withstand voltage insulating material of the present embodiment may contain components other than the polyamide resin.

An example of the other components is a stabilizer. Examples of the stabilizer include a heat stabilizer, an antioxidant, a phosphorus atom-containing compound that can be added at the time of synthesis of the polyamide resin, and a component derived from a polymerization rate modifier.

The total amount of the stabilizer is preferably from 0.001 to 3 parts by mass based on 100 parts by mass of the polyamide resin (A).

Examples of the antioxidant include phenol-based antioxidants (preferably hindered phenol-based antioxidants), amine-based antioxidants, phosphorus-based antioxidants, and sulfur-based antioxidants.

These antioxidants can be used singly or in combination of two or more kinds thereof.

The added amount of the antioxidant is preferably from 0.001 to 3.0 parts by mass based on 100 parts by mass of the polyamide resin (A).

Specific examples of the phosphorus atom-containing compound include phosphinic acid compounds, such as dimethyl phosphinic acid, phenyl methyl phosphinic acid; hypophosphorous acid compounds, such as hypophosphorous acid, sodium hypophosphite, potassium hypophosphite, lithium hypophosphite, magnesium hypophosphite, calcium hypophosphite, and ethyl hypophosphite; phosphonic acid compounds, such as phosphonic acid, sodium phosphonate, lithium phosphonate, potassium phosphonate, magnesium phosphonate, calcium phosphonate, phenyl phosphonate, ethyl phosphonate, sodium phenyl phosphonate, potassium phenyl phosphonate, lithium phenyl phosphonate, diethyl phenyl phosphonate, sodium ethyl phosphonate, and potassium ethyl phosphonate; phosphonous acid compounds, such as phosphonous acid, sodium phosphonite, lithium phosphonite, potassium phosphonite, magnesium phosphonite, calcium phosphonite, phenyl phosphonite, sodium phenyl phosphonite, potassium phenyl phosphonite, lithium phenyl phosphonite, and ethyl phenyl phosphonite; and phosphonic acid compounds, such as phosphonic acid, sodium hydrogen phosphite, sodium phosphite, lithium phosphite, potassium phosphite, magnesium phosphite, calcium phosphite, triethyl phosphite, triphenyl phosphite, and pyrophosphite. Of these, sodium hypophosphite and calcium hypophosphite are preferable, and calcium hypophosphite is more preferable. Using calcium hypophosphite tends to further improve the thermal resistance of the resulting polyamide resin.

One of these phosphorus atom-containing compounds can be used alone, or two or more can be used in combination.

The added amount of the phosphorus atom-containing compound is preferably an amount at which a concentration of phosphorus atoms in the polyamide resin (A) is from 0.01 to 0.1 mass%.

Examples of components other than the stabilizer include a thermoplastic resin other than a polyamide resin, a filler, a hydrolysis resistance improver, a matting agent, a plasticizer, a dispersant, an antistatic agent, an anticolorant, an antigelling agent, and a colorant. For details of these, reference can be made to the descriptions in paragraphs [0130] to [0155] of JP 4894982 B, and the descriptions in paragraphs [0041] and [0042] and [0046] to [0103] of WO 2021/241471, the contents of which are incorporated in the present specification by reference.

The total amount of other components is preferably 20.0 mass% or less, more preferably 10.0 mass% or less, still more preferably 5.0 mass% or less, and even more preferably 1.0 mass% or less of the high withstand voltage insulating material of the present embodiment. Only one type of other components may be used alone, or two or more types may be used in combination.

In the present embodiment, it is preferable that the polyamide resin (A) and other components are melt-kneaded and then molded.

The high withstand voltage insulating material of the present embodiment is preferably excellent in tracking resistance under a situation where a high voltage is applied. Specifically, the time it takes for the insulating material to break down at a voltage of 2000 V (tracking resistance time at 2000 V) in accordance with the JIS-C2136 constant voltage tracking method is preferably 30 minutes or more, more preferably 34 minutes or more, still more preferably 35 minutes or more, even more preferably 39 minutes or more, further more preferably 41 minutes or more, and still further more preferably 46 minutes or more, and furthermore, the time is preferably 50 minutes or more, 55 minutes or more, 58 minutes

or more, 60 minutes or more, 65 minutes or more, 66 minutes or more, 70 minutes or more, 75 minutes or more, 80 minutes or more, 85 minutes or more, 89 minutes or more, 93 minutes or more, and 95 minutes or more. The upper limit of the tracking resistance time of the insulating material at 2000 V is not particularly limited, and is practically 200 minutes or less.

The high withstand voltage insulating material of the present embodiment is preferably used for applications to which a high voltage is applied. For example, the high withstand voltage insulating material is preferably used for electric and electronic components such as a charger and a connector in the case of charging at a higher speed.

In addition, the high withstand voltage insulating material is also preferably used as a covering material such as a cord and a bus bar, and a circuit board material.

In the present embodiment, in addition to the above-described, the high withstand voltage insulating material can also be used for the application described in paragraph [0049] of JP 2020-076023 A, and the content thereof is incorporated into the present specification.

The high withstand voltage insulating molded article of the present embodiment is formed from the high withstand voltage insulating material of the present embodiment.

The method for molding the molded article is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, a pressure molding method, stretching, and vacuum molding. The high withstand voltage insulating material of the present embodiment is preferably molded by injection molding.

Examples of insulating molded articles formed from the high withstand voltage insulating material of the present embodiment include injection molded articles, thin-wall molded articles, hollow molded articles, films (including plates and sheets), cylindrical molded articles (hoses, tubes, etc.), ring-shaped molded articles, circular molded articles, elliptical molded articles, gear-shaped molded articles, polygonal-shaped molded articles, irregular shaped molded articles, hollow articles, frame-shaped molded articles, box-shaped molded articles, panel-shaped extrusion molded articles, and fibers, and an injection molded article is preferable.

In addition, the high withstand voltage insulating material of the present embodiment can also be used as a surface layer material. For example, the high withstand voltage insulating material can be used by being bonded to a surface of a conductive or weakly insulating film or sheet. In addition, the high withstand voltage insulating material of the present embodiment and other materials can be molded by insert molding.

## Examples

Hereinafter, the present invention will be described more specifically with reference to Examples. Materials, amounts used, proportions, processing details, and processing procedures described in the following Examples can be appropriately changed without departing from the spirit of the present invention. Thus, the scope of the present invention is not limited to the specific examples described below.

If it is difficult to obtain the measuring instrument or the like used in Examples due to discontinuation or the like, another instrument with equivalent performance can be used for the measurement.

### 1. Synthesis of resin

<Example 1 MXD6>

In a jacketed reaction can equipped with an agitator, a partial condenser, a cooler, a thermometer, a dropping funnel, and a nitrogen gas introduction tube, 7220 g (49.4 mol) of adipic acid (available from BASF) and 11.7 g of sodium acetate/sodium hypophosphite monohydrate (molar ratio = 1/1.5) were charged, sufficiently purged with nitrogen, and heated and melted at 170°C, then, while the contents were agitated, 6661 g (48.9 mol) of meta-xylylenediamine (available from Mitsubishi Gas Chemical Company, Inc.) was added dropwise to a melted product in a reaction vessel under stirring, and the internal temperature was continuously increased to 250°C over 2.5 hours while generated condensed water was discharged outside of the system. After dropwise addition was completed, the internal temperature was increased. When the temperature reached 260°C, the pressure inside the reaction vessel was reduced, and the melt polycondensation reaction was further continued for 20 minutes. Thereafter, the inside of the system was pressurized with nitrogen, and the obtained polymer was removed from the strand die and pelletized to obtain a polyamide resin material (resin composition).

The obtained polyamide resin had a humidity control moisture content of 4.6%, a number average molecular weight of 15000, a glass transition temperature of 85°C, and a melting point of 237°C.

<<Tracking resistance time>>

The polyamide resin obtained in Example 1 was dried, and then injection-molded at a cylinder temperature of 20°C higher than the melting point to obtain a plate having a thickness of 6 mm. The obtained plate was cut into a size of 120 mm in length and 50 mm in width, sandwiched between glass plates, and held at 150°C for 1 hour under a nitrogen gas atmosphere to perform crystallization treatment. The time until the obtained plate was broken at a voltage of 2000 V was measured in accordance with the JIS-C2136 constant voltage tracking method using an inclined flat plate tracking resistance tester YST-587 type (available from Yamayoshikenki.Com). At the time when at least one of tracking breakage, ignition, or penetrating breakage occurred, it was determined that breakage occurred, and a test was performed with n = 5, and an average value of the time until breakage was taken as the tracking resistance time.

<<Flexural modulus>>

The polyamide resin material obtained in Example 1 was dried, and then injection-molded at a cylinder temperature of 20°C higher than the melting point to obtain a test piece having a thickness of 4 mm. The obtained strip piece was sandwiched between glass plates, and held at 150°C for 1 hour under a nitrogen gas atmosphere to perform crystallization treatment. The obtained test piece was stored at 23°C and 50% RH (relative humidity) for 7 days, and then the flexural modulus (GPa) was determined according to JIS K 7171.

A bend graph Type B (available Toyo Seiki Co., Ltd.) was used as an apparatus, and measurement was performed at a measurement temperature of 23°C and a measurement humidity of 50% RH.

<Example 2 MP6>

In a jacketed reaction can equipped with an agitator, a partial condenser, a cooler, a thermometer, a dropping funnel, and a nitrogen gas introduction tube, 7220 g (49.4 mol) of adipic acid (available from BASF) and 11.7 g of sodium acetate/sodium hypophosphite · monohydrate (molar ratio = 1/1.5) were charged, sufficiently purged with nitrogen, and heated and melted at 170°C, then, while the contents were agitated, 6661 g of a mixed xylylenediamine (34.2 mol of meta-xylylenediamine and 14.7 mol of para-xylylenediamine, available from Mitsubishi Gas Chemical Company, Inc.), in which a molar ratio of meta-xylylenediamine and para-xylylenediamine was 70/30, was added dropwise to a melted product in a reaction vessel under stirring, and the internal temperature was continuously increased to 260°C over 2.5 hours while generated condensed water was discharged outside of the system. After dropwise addition was completed, the internal temperature was increased. When the temperature reached 270°C, the pressure inside the reaction vessel was reduced. The internal temperature was then further increased, and the melt polycondensation reaction was continued for 20 minutes at 280°C. Subsequently, the inside of the system was pressurized with nitrogen, and the obtained polymer was taken out from the strand die and pelletized to produce a polyamide resin material.

The obtained polyamide resin material had a humidity control moisture content of 4.5%, a number average molecular weight of 15000, a glass transition temperature of 89°C, and a melting point of 257°C.

The tracking resistance time and the flexural modulus were measured in the same manner as in Example 1.

<Example 3 PXD10>

In a jacketed reaction can equipped with an agitator, a partial condenser, a cooler, a thermometer, a dropping funnel, and a nitrogen gas introduction tube, 10000 g (49.4 mol) of sebacic acid (available from CASDA), 0.8 g of sodium acetate, and 1.2 g of calcium hypophosphite were charged, sufficiently purged with nitrogen, and heated and melted at 170°C, then, while the contents were agitated, 6667 g (48.9 mol) of para-xylylenediamine (available from Showa Denko K.K.) was added dropwise to a melted product in a reaction vessel under stirring, and the internal temperature was continuously increased to 290°C over 2.5 hours while generated condensed water was discharged outside of the system. After dropwise addition was completed, the internal temperature was increased. When the temperature reached 300°C, the pressure inside the reaction vessel was reduced, and the melt polycondensation reaction was further continued for 20 minutes. Subsequently, the inside of the system was pressurized with nitrogen, and the obtained polymer was taken out from the strand die and pelletized to produce a polyamide resin material.

The obtained polyamide resin material had a humidity control moisture content of 2.1%, a number average molecular weight of 15000, a glass transition temperature of 73°C, and a melting point of 290°C.

The tracking resistance time and the flexural modulus were measured in the same manner as in Example 1.

<Example 4 MXD6I (50)>

In a jacketed 50 L reaction can equipped with an agitator, a partial condenser, a cooler, a thermometer, a dropping

funnel, and a nitrogen gas introduction tube, 4212 g of adipic acid, 4788 g of isophthalic acid, and 11.4 g of sodium acetate/sodium hypophosphite · monohydrate (molar ratio = 1/1.5) were charged, and sufficiently purged with nitrogen, the temperature was increased to 180°C under a small amount of nitrogen flow to uniformly melt adipic acid and isophthalic acid, then 7772 g of meta-xylylenediamine was added dropwise to a melted product in a reaction vessel under stirring while the inside of the system was stirred, and the internal temperature was continuously increased to 265°C over 2.5 hours while generated condensed water was discharged outside of the system. After dropwise addition was completed, the internal temperature was increased. When the temperature reached 270°C, the pressure inside the reaction vessel was reduced, and the melt polycondensation reaction was further continued for 10 minutes. Subsequently, the inside of the system was pressurized with nitrogen, and the obtained polymer was taken out from the strand die and pelletized to produce a polyamide resin material.

When an attempt was made to measure the melting point of the obtained polyamide resin material in accordance with the description in paragraph [0036] of WO 2017/090556, the polyamide resin material did not have a clear melting point and was found to be an amorphous resin.

The obtained polyamide resin material had a humidity control moisture content of 7.2%, a number average molecular weight of 15000, and a glass transition temperature of 127°C.

The tracking resistance time and the flexural modulus were measured in the same manner as in Example 1.

<Example 5 p-BDE10>

<<Example of p-BDEA (p-benzenediethanamine)>>

The p-benzenediethanamine was obtained by reducing p-xylylene dicyanide (available from Tokyo Chemical Industry Co., Ltd.) under a hydrogen atmosphere and then distilling and purifying the obtained product. As a result of analysis using gas chromatography, a purity was 99.7%.

In a jacketed reaction can equipped with an agitator, a partial condenser, a cooler, a thermometer, a dropping funnel, and a nitrogen gas introduction tube, 9200 g (45.5 mol) of sebacic acid (available from CASDA), 0.8 g of sodium acetate, and 1.2 g of calcium hypophosphite were charged, sufficiently purged with nitrogen, and heated and melted at 170°C, then, while the contents were agitated, 7397 g (45.0 mol) of p-BDEA was added dropwise to a melted product in a reaction vessel under stirring, and the internal temperature was continuously increased to 290°C over 2.5 hours while generated condensed water was discharged outside of the system. After dropwise addition was completed, the internal temperature was increased. When the temperature reached 300°C, the pressure inside the reaction vessel was reduced, and the melt polycondensation reaction was further continued for 20 minutes. Subsequently, the inside of the system was pressurized with nitrogen, and the obtained polymer was taken out from the strand die and pelletized to produce a polyamide resin material.

The obtained polyamide resin material had a humidity control moisture content of 1.9%, a number average molecular weight of 15000, and a melting point of 295°C.

The tracking resistance time and the flexural modulus were measured in the same manner as in Example 1.

<Example 6 PA10T>

In a reaction can having an internal volume of 50 L, 5500 g (33.1 mol) of terephthalic acid, 5648 g (32.8 mol, available from Kokura Gosei Kogyo, Ltd.) of 1,10-decanediamine, 0.8 g of calcium hypophosphite, 0.5 g of sodium acetate, and 5743 g of water were charged, and purged with nitrogen, heating was started with stirring, and the internal temperature was increased to 160°C over 1 hour. At this time, stirring was performed using a double helical ribbon stirring blade, and the space between the shaft of the stirring blade and the top plate of the reaction tank was sealed using pure water as a sealing liquid.

Thereafter, the internal temperature was raised to 200°C, and 3600 g of water was distilled off over 3 hours. Subsequently, the internal temperature was raised to 210°C and held for 1.5 hours. Thereafter, the resulting primary polycondensate was flushed from an outlet at a lower portion of the reaction tank.

Subsequently, the resulting primary polycondensate was subjected to solid phase polymerization to increase the degree of polymerization. At this time, the solid phase polymerization was carried out by heating at 260°C for 2 hours in a nitrogen atmosphere using an inert oven. 0.02 mass% of copper iodide and 0.06 mass% of potassium iodide were dryblended with the sample after the solid phase polymerization, and extruded and pelletized by a twin-screw extruder to obtain a polyamide resin material.

The obtained polyamide resin material had a humidity control moisture content of 2.1%, a number average molecular weight of 11000, and a melting point of 304°C.

The tracking resistance time and the flexural modulus were measured in the same manner as in Example 1.

<Example 7 p-BIC>

In a reaction can having an internal volume of 50 L, 4552 g (27.4 mol) of isophthalic acid, 524 g (3.0 mol, available from Nikko Rica Corporation) of 1,4-cyclohexanedicarboxylic acid, 5000 g (30.4 mol) of p-BDEA, 1.5 g of calcium hypophosphite, 1.0 g of sodium acetate, and 5240 g of water were charged, and purged with nitrogen, heating was started with stirring, and the internal temperature was increased to 160°C over 1 hour. At this time, stirring was performed using a double helical ribbon stirring blade, and the space between the shaft of the stirring blade and the top plate of the reaction tank was sealed using pure water as a sealing liquid.

Thereafter, the internal temperature was raised to 200°C, and 3600 g of water was distilled off over 3 hours. Subsequently, the internal temperature was raised to 210°C and held for 1.5 hours. Thereafter, the resulting primary polycondensate was flushed from an outlet at a lower portion of the reaction tank.

Subsequently, the resulting primary polycondensate was subjected to solid phase polymerization to increase the degree of polymerization. At this time, the solid phase polymerization was carried out by heating at 260°C for 2 hours in a nitrogen atmosphere using an inert oven. The sample after the solid phase polymerization was extruded and pelletized by a twin-screw extruder to obtain a polyamide resin material.

The obtained polyamide resin material had a humidity control moisture content of 4.9%, a number average molecular weight of 11000, a glass transition temperature of 155°C, and a melting point of 304°C.

The tracking resistance time and the flexural modulus were measured in the same manner as in Example 1.

<Example 8 1,3-BAC6>

In a jacketed reaction can equipped with an agitator, a partial condenser, a cooler, a thermometer, a dropping funnel, and a nitrogen gas introduction tube, 7220 g (49.4 mol) of adipic acid (available from BASF) and 9.7 g of sodium acetate/sodium hypophosphite - monohydrate (molar ratio = 1/1.5) were charged, sufficiently purged with nitrogen, and heated and melted at 170°C, then, while the contents were agitated, 6957 g (48.9 mol) of 1,3-BAC (cis/trans =74/26 mol/mol, available from Mitsubishi Gas Chemical Company, Inc.) was added dropwise to a melted product in a reaction vessel under stirring, and the internal temperature was continuously increased to 250°C over 2.5 hours while generated condensed water was discharged outside of the system. After dropwise addition was completed, the internal temperature was increased. When the temperature reached 260°C, the pressure inside the reaction vessel was reduced, and the melt polycondensation reaction was further continued for 20 minutes. Subsequently, the inside of the system was pressurized with nitrogen, and the obtained polymer was taken out from the strand die and pelletized to produce a polyamide resin material.

The obtained polyamide resin material had a humidity control moisture content of 7.0%, a number average molecular weight of 15000, a glass transition temperature of 105°C, and a melting point of 232°C.

The tracking resistance time and the flexural modulus were measured in the same manner as in Example 1.

<Comparative Example 1 meta-based aramid>

An aramid M plate material (available from OILES CORPORATION) was cut into a size of 120 mm in length, 50 mm in width, and 6 mm in thickness. For the obtained plate, the tracking resistance time was measured in the same manner as in Example 1.

The humidity control moisture content of the aramid M plate material was 3.1%.

[Table 1]

| | | | Example 1 | Example 2 | Example 3 | Example 4 | Example 5 |
|---|---|---|---|---|---|---|---|
| | | | MXD6 | MP6 | PXD10 | MXD6I(50) | p-BDE10 |
| Formula weight of structural unit | | g/mol | 246.31 | 246.31 | 302.42 | 256.31 | 330.47 |
| Type and number of ring(s) (a) in structural unit | Benzene ring | Number/structural unit | 1 | 1 | 1 | 1.5 | 1 |
| | Naphthalene ring | Number/structural unit | | | | | |
| | Cyclohexane ring | Number/structural unit | | | | | |

(continued)

| | | Example 1 | Example 2 | Example 3 | Example 4 | Example 5 |
|---|---|---|---|---|---|---|
| | | MXD6 | MP6 | PXD10 | MXD6I(50) | p-BDE10 |
| A in Formula (A) | mass% | 30.9 | 30.9 | 25.2 | 44.5 | 23.0 |
| B in Formula (A) | Number | 2.00 | 2.00 | 2.00 | 1.67 | 3.00 |
| C in Formula (A) | Number | 2.00 | 2.30 | 3.00 | 2.00 | 3.00 |
| [B/(A × C) ] × 100 | | 3.24 | 2.81 | 2.65 | 1.87 | 4.34 |
| Humidity control moisture content | % | 4.6 | 4.5 | 2.1 | 7.2 | 1.9 |
| Tracking resistance time | Minutes | 100 | 81 | 65 | 45 | 112 |
| Flexural modulus | GPa | 4.5 | 4.1 | 2.9 | 4.1 | 2.5 |
| [Flexural modulus/tracking resistance time] × 100 | [GPa/min] × 100 | 4.5 | 5.1 | 4.5 | 9.1 | 2.2 |

[Table 2]

| | | | Example 6 | Example 7 | Example 8 | Comparative Example 1 |
|---|---|---|---|---|---|---|
| | | | PA10T | p-BIC | 1,3-BAC6 | Meta-based aramid |
| Formula weight of structural unit | | g/mol | 302.42 | 294.96 | 252.36 | 238.25 |
| Type and number of ring(s) (a) in structural unit | Benzene ring | Number/structural unit | 1 | 1.9 | | 2 |
| | Naphthalene ring | Number/structural unit | | | | |
| | Cyclohexane ring | Number/structural unit | | 0.1 | 1 | |
| A in Formula (A) | | mass% | 25.2 | 51.8 | 32.6 | 63.9 |
| B in Formula (A) | | Number | 1.00 | 2.00 | 2.00 | 1.00 |
| C in Formula (A) | | Number | 3.00 | 2.55 | 2.00 | 2.00 |
| [B/(A × C) ] × 100 | | | 1.32 | 1.51 | 3.07 | 0.78 |
| Humidity control moisture content | | % | 2.1 | 4.9 | 7.0 | 3.1 |
| Tracking resistance time | | Minutes | 35 | 42 | 85 | 5 |
| Flexural modulus | | GPa | 2.5 | 4.0 | 4.1 | |
| [Flexural modulus/tracking resistance time] × 100 | | [GPa/min] × 100 | 7.1 | 9.5 | 4.8 | |

In the above-described table, in Formula (A), A represents the content ratio (mass%) of the ring (a) on a molecular weight basis in the polyamide resin (A), B represents the average value of the number of bonds between the ring (a) and an amide bond closest to the ring (a) in each structural unit, and C represents the average value of the number of bonds between positions where a group connected from the amide bond is bonded to the ring (a) in each structural unit. [B/(A × C)] × 100 is a calculated value from Formula (A).

As is apparent from the above results, the insulating material of the present embodiment was excellent in high withstand voltage insulation properties and also excellent in mechanical strength.

The data of Examples 1 to 11 and Comparative Example 1 are indicated in FIG. 1. The vertical axis represents the

tracking resistance time under a voltage of 2000 V, and the horizontal axis represents a value of $[B/(A \times C)] \times 100$.

## Claims

1. A high withstand voltage insulating material, comprising a polyamide resin (A) comprising a structural unit containing a ring (a) selected from the group consisting of a benzene ring, a naphthalene ring, and a cyclohexane ring, wherein a content ratio of the ring (a) on a molecular weight basis in the polyamide resin (A) is from 10 to 60 mass%, and the polyamide resin (A) satisfies Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

2. The high withstand voltage insulating material according to claim 1, wherein the content ratio of the ring (a) on a molecular weight basis in the polyamide resin (A) is from 10 to 40 mass%.

3. The high withstand voltage insulating material according to claim 1 or 2, wherein a value for B in Formula (A) is from 0.8 to 3.2.

4. The high withstand voltage insulating material according to any one of claims 1 to 3, wherein a value for C in Formula (A) is from 1.0 to 3.0.

5. The high withstand voltage insulating material according to any one of claims 1 to 4, wherein the structural unit containing the ring (a) comprises a structural unit represented by Formula (X):

Formula (X)

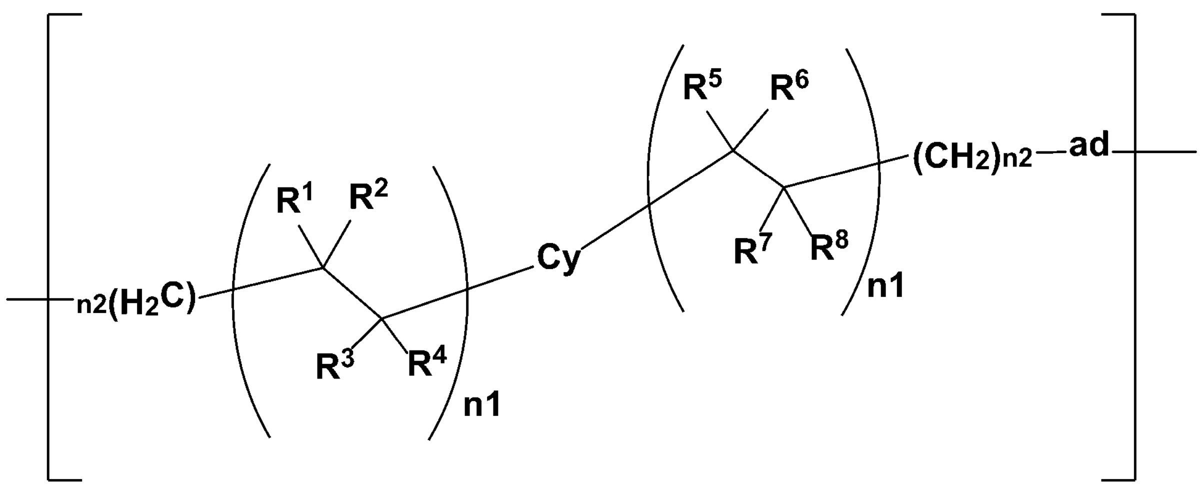

where in Formula (X), $R^1$ to $R^8$ each independently represent a hydrogen atom or an aliphatic group having from 1 to 5 carbon atoms, Cy represents a benzene ring, a naphthalene ring, or a cyclohexane ring, n1 is each independently an integer of from 0 to 2, and n2 is each independently 0 or 1, and ad represents an amide bond.

**6.** The high withstand voltage insulating material according to any one of claims 1 to 5, wherein the polyamide resin (A) comprises a diamine-derived structural unit and a dicarboxylic acid-derived structural unit, and 30 mol% or more of the diamine-derived structural unit comprises a structural unit containing the ring (a).

**7.** The high withstand voltage insulating material according to any one of claims 1 to 5, wherein the polyamide resin (A) comprises a diamine-derived structural unit and a dicarboxylic acid-derived structural unit, and 70 mol% or more of the diamine-derived structural unit comprises a structural unit containing the ring (a).

**8.** The high withstand voltage insulating material according to any one of claims 1 to 7, wherein the polyamide resin (A) comprises a diamine-derived structural unit and a dicarboxylic acid-derived structural unit, and the diamine-derived structural unit comprises a diamine-derived structural unit represented by Formula (Y):

Formula (Y)

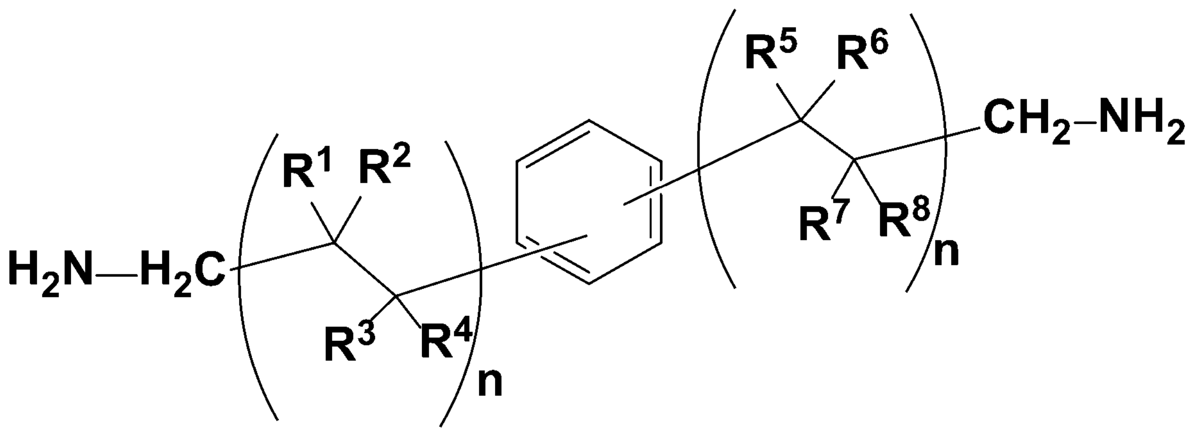

where in Formula (Y), $R^1$ to $R^8$ each independently represent a hydrogen atom or an aliphatic group having from 1 to 5 carbon atoms, and n is each independently an integer of from 0 to 2.

**9.** The high withstand voltage insulating material according to any one of claims 1 to 8, wherein the polyamide resin (A) comprises a diamine-derived structural unit and a dicarboxylic acid-derived structural unit, and the diamine-derived structural unit comprises a structural unit derived from a xylylenediamine.

**10.** The high withstand voltage insulating material according to any one of claims 1 to 9, wherein the polyamide resin (A) comprises a diamine-derived structural unit and a dicarboxylic acid-derived structural unit, and 30 mol% or more of the dicarboxylic acid-derived structural unit comprises a structural unit derived from an aliphatic dicarboxylic acid having from 4 to 20 carbon atoms.

**11.** The high withstand voltage insulating material according to any one of claims 1 to 10, wherein the polyamide resin (A) comprises a diamine-derived structural unit and a dicarboxylic acid-derived structural unit, and 70 mol% or more of the dicarboxylic acid-derived structural unit comprises a structural unit derived from an aliphatic dicarboxylic acid having

from 4 to 20 carbon atoms.

**12.** The high withstand voltage insulating material according to any one of claims 1 to 11, wherein the polyamide resin (A) comprises a diamine-derived structural unit and a dicarboxylic acid-derived structural unit, and the dicarboxylic acid-derived structural unit contains at least one selected from adipic acid, sebacic acid, and dodecanedioic acid.

**13.** The high withstand voltage insulating material according to any one of claims 1 to 12, wherein the polyamide resin (A) comprises a diamine-derived structural unit and a dicarboxylic acid-derived structural unit, 70 mol% or more of the diamine-derived structural unit comprises a structural unit derived from a xylylenediamine, and 70 mol% or more of the dicarboxylic acid-derived structural unit contains at least one selected from adipic acid, sebacic acid, and dodecanedioic acid.

**14.** The high withstand voltage insulating material according to any one of claims 1 to 13, further comprising a stabilizer.

**15.** The high withstand voltage insulating material according to any one of claims 1 to 14, wherein a time it takes for the insulating material to break down at a voltage of 2000 V in accordance with a JIS-C2136 constant voltage tracking method is 30 minutes or more.

**16.** A high withstand voltage insulating molded article, comprising the high withstand voltage insulating material according to any one of claims 1 to 15.

**17.** A use of a polyamide resin (A) for a high withstand voltage insulating material, the polyamide resin (A) comprising a structural unit containing a ring (a) selected from the group consisting of a benzene ring, a naphthalene ring, and a cyclohexane ring, a content ratio of the ring (a) on a molecular weight basis in the polyamide resin (A) being from 10 to 60 mass%, and the polyamide resin (A) satisfying Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

**18.** A method for producing a high withstand voltage insulating part, the method comprising melt-kneading a polyamide resin (A) with another component and then molding,
the polyamide resin (A) comprising a structural unit containing a ring (a) selected from the group consisting of a benzene ring, a naphthalene ring, and a cyclohexane ring, a content ratio of the ring (a) on a molecular weight basis in the polyamide resin (A) being from 10 to 60 mass%, and the polyamide resin (A) satisfying Formula (A):

$$1.0 \leq [B/(A \times C)] \times 100 \leq 5.0 \cdots (A)$$

where in Formula (A), A represents the content ratio (mass%) of the ring (a) on a molecular weight basis in the polyamide resin (A), B represents an average value of the number of bonds between the ring (a) and an amide bond closest to the ring (a) in each structural unit, and C represents an average value of the number of bonds between positions where a group connected from the amide bond is bonded to the ring (a) in each structural unit.

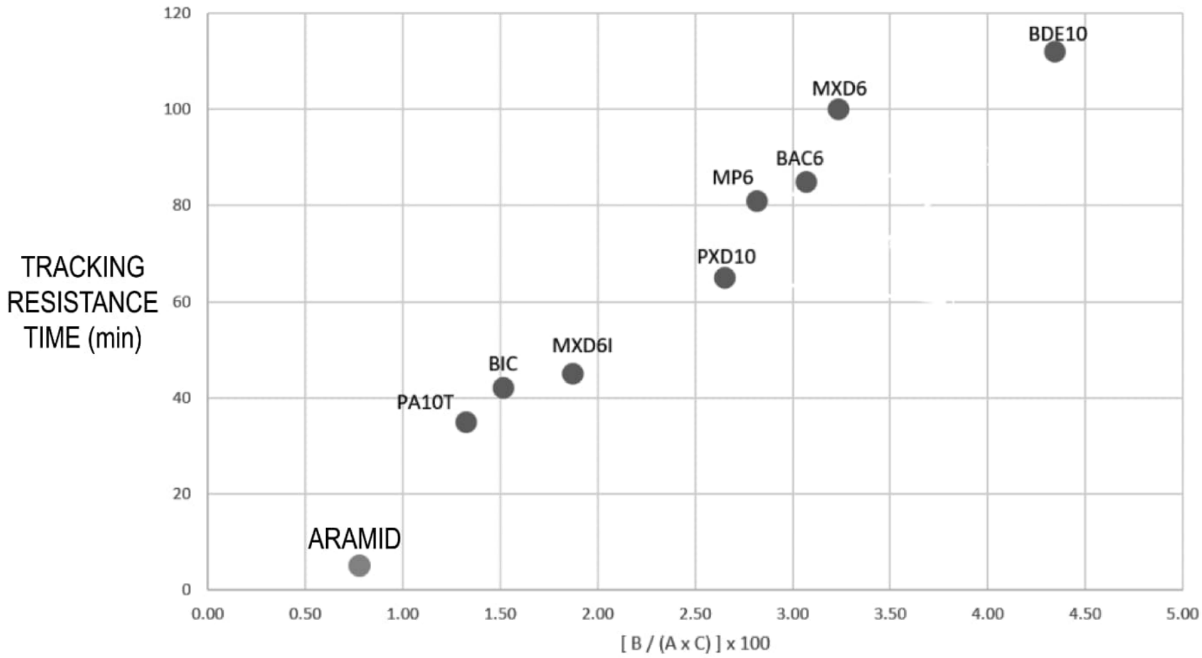
TRACKING RESISTANCE TIME (min)
120
100
80
60
40
20
0
BDE10
MXD6
BAC6
MP6
PXD10
MXD6I
BIC
PA10T
ARAMID
0.00
0.50
1.00
1.50
2.00
2.50
3.00
3.50
4.00
4.50
5.00
[ B / (A x C) ] x 100

FIG. 1

**INTERNATIONAL SEARCH REPORT**

International application No.
**PCT/JP2023/041570**

**A. CLASSIFICATION OF SUBJECT MATTER**

***C08G 69/02***(2006.01)i; ***H01B 3/30***(2006.01)i
FI: C08G69/02; H01B3/30 C

According to International Patent Classification (IPC) or to both national classification and IPC

**B. FIELDS SEARCHED**

Minimum documentation searched (classification system followed by classification symbols)

C08G69/02; H01B3/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-177548 A (MITSUBISHI GAS CHEMICAL CO., INC.) 25 September 2014 (2014-09-25) claims, examples, paragraph [0002] | 1-18 |
| X | WO 2013/038846 A1 (MITSUBISHI GAS CHEMICAL CO., INC.) 21 March 2013 (2013-03-21) claims, examples | 1-18 |
| X | JP 2015-105321 A (UNITIKA LTD.) 08 June 2015 (2015-06-08) claims, examples, paragraphs [0033], [0040] | 1-5, 14-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

**INTERNATIONAL SEARCH REPORT**
**Information on patent family members**

International application No.
**PCT/JP2023/041570**

| Patent document cited in search report | Publication date (day/month/year) | Patent family member(s) | Publication date (day/month/year) |
|---|---|---|---|
| JP 2014-177548 A | 25 September 2014 | (Family: none) | |
| WO 2013/038846 A1 | 21 March 2013 | US 2014/0194569 A1<br>claims, examples<br>EP 2604643 A1<br>CN 103154088 A<br>KR 10-2013-0045384 A<br>HK 1185899 A<br>TW 201333072 A | |
| JP 2015-105321 A | 08 June 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021008591 A
- JP 4894982 B
- WO 2021241471 A
- JP 2020076023 A
- WO 2017090556 A